# EUROPEAN PATENT SPECIFICATION

(11) **EP 3 005 584 B1**
(45) Date of publication and mention of the grant of the patent: **20.11.2019**
(21) Application number: 14803593.4
(22) Date of filing: 30.05.2014
(51) Int. Cl.: H04W 76/14, H04W 72/04

(54) **EFFICIENT USER, SERVICE, OR CONTENT REPRESENTATION FOR DEVICE COMMUNICATION**
EFFIZIENTE BENUTZER-, DIENST- ODER INHALTSDARSTELLUNG ZUR VORRICHTUNGSKOMMUNIKATION
REPRÉSENTATION D'UTILISATEUR, DE SERVICE, OU DE CONTENU EFFICACE POUR UN DISPOSITIF COMMUNICATION

(30) Priority: 31.05.2013 US 201361829970 P
(43) Date of publication of application: 13.04.2016
(73) Proprietor: Intel IP Corporation, Santa Clara, CA 95054 (US)
(72) Inventor: PYATTAEV, Alexander, FI-33720 Tampere LS (FI); JOHNSSON, Kerstin, Palo Alto, California 94306 (US); ANDREEV, Sergey, FI-33720 Tampere LS (FI); KOUCHERYAVY, Yevgeni, FI-33720 Tampere LS (FI)
(74) Representative: Goddar, Heinz J.
(86) International application number: PCT/US2014/040367
(87) International publication number: WO 2014/194279

(56) References cited:
- US-A1- 2008 130 516
- US-A1- 2008 130 516
- US-A1- 2009 319 502
- US-A1- 2011 072 126
- US-A1- 2011 125 749
- US-A1- 2011 153 773
- US-A1- 2013 117 276
- US-A1- 2013 117 276

## Description

### FIELD OF INVENTION

Embodiments of the present invention relate generally to the technical field of data processing, and more particularly, to computer devices operable to communicate data over a network.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure. Unless otherwise indicated herein, the approaches described in this section are not prior art to the claims in the present disclosure and are not admitted to be prior art by their inclusion in this section.

To communicate data, a computing device may request a resource that may be available at another computing device. For example, a computing device may execute a peer-to-peer ("P2P") application that may be adapted to consume a resource. With P2P, a device may operate as both a client and a server - that is, a device may both offer and request resources. Existing protocols, however, generally require one or more central servers to store mappings from textual resource descriptions to actual Internet protocol ("IP") addresses and ports at which those resources are available. The storage and indexing commensurate with this amount of data may require significant overhead.

In US2011/153773 A1, a device is disclosed that broadcasts an advertisement message including one or more service identifiers. These service identifiers are hash values representing a signature or certain characteristics of a particular service.

In the following, references to embodiments that do not fall under the scope of the appended claims are provided as background examples only. The scope of the invention is defined by the appended claims.

### BRIEF DESCRIPTION OF THE DRAWINGs

The embodiments of the invention are illustrated by way of example and not by way of limitation in the figures of the accompanying drawings in which like references indicate similar elements. It should be noted that references to "an" or "one" embodiment of the invention in this disclosure are not necessarily to the same embodiment, and they may mean at least one.
FIG. 1 is a block diagram illustrating an environment for network-assisted device-to-device ("D2D") communication by a D2D server between a first user equipment ("UE") and a second UE, in accordance with various embodiments.
FIG. 2 is a block diagram illustrating a server for facilitating D2D communication between UEs based on hash space, in accordance with various embodiments.
FIG. 3 is a block diagram illustrating a record for hardware management associated with hash space, in accordance with various embodiments.
FIG. 4 is a block diagram illustrating a UE adapted for resource communication over a D2D channel, in accordance with various embodiments.
FIG. 5 is a block diagram illustrating a communication interface to receive and transmit data associated with hash values, in accordance with various embodiments.
FIG. 6 is a flow diagram illustrating a method for transmitting a plurality of hash values associated with provision of a resource by a UE to facilitate D2D communication between the UE and another UE, in accordance with various embodiments.
FIG. 7 is a flow diagram illustrating a method for requesting provision of a resource via D2D communication based on a plurality of hash values, in accordance with various embodiments.
FIG. 8 is a flow diagram illustrating a method for providing a first UE with connectivity information associated with D2D communication based on a plurality of hash values, in accordance with various embodiments.
FIG. 9 is a flow diagram illustrating a method for storing hash values associated with provision of a resource by a UE, in accordance with various embodiments.

### DETAILED DESCRIPTION

In the following detailed description, reference is made to the accompanying drawings, which form a part hereof wherein like numerals designate like parts throughout, and in which is shown by way of illustration embodiments that may be practiced. It is to be understood that other embodiments may be utilized and structural or logical changes may be made without departing from the scope of the present disclosure.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For the purposes of the present disclosure, the phrases "A or B" and "A and/or B" means (A), (B), or (A and B). For the purposes of the present disclosure, the phrase "A, B, and/or C" means (A), (B), (C), (A and B), (A and C), (B and C), or (A, B, and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the terms "module" and/or "logic" may refer to, be part of, or include an Application Specific Integrated Circuit ("ASIC"), an electronic circuit, a processor (shared, dedicated, or group), and/or memory (shared, dedicated, or group) that execute one or more software or firmware programs, a combinational logic circuit, and/or other suitable hardware components that provide the described functionality.

As described herein, a first user equipment ("UE") may be adapted to determine a plurality of hash values associated with provision of a resource by the first UE. The first UE may further determine a port at which the resource is available to be provided. The first UE may communicate this information to a server. When a second UE wishes to consume the resource, the second UE may determine a plurality of hash values that correspond to those determined by the first UE. The second UE may transmit these determined hash values to the server. In response, the server may transmit the port and an IP address associated with the first UE to the second UE. The server may further facilitate D2D communication between the UEs for provision of the resource. Other embodiments may be described and/or claimed.

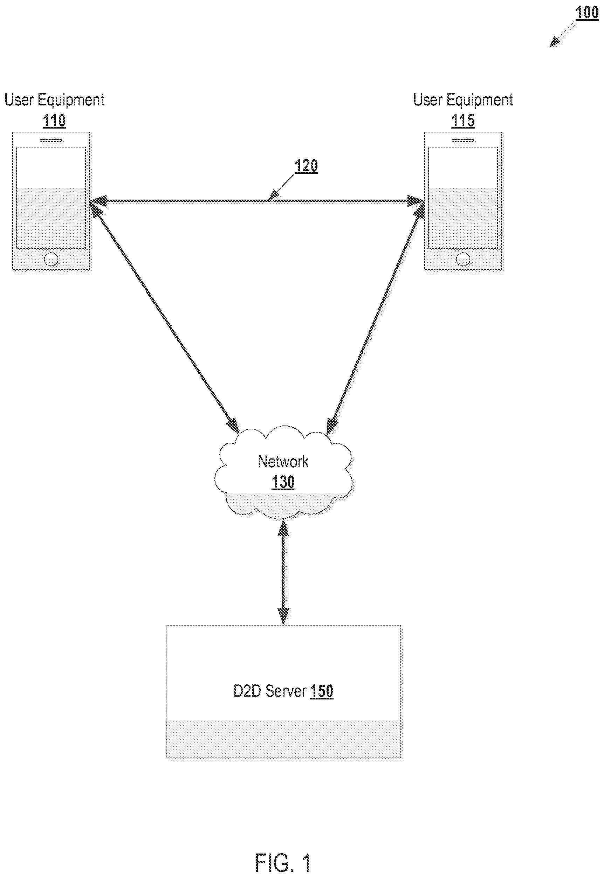

Beginning first with FIG. 1, a block diagram shows an environment 100 for network-assisted D2D communication by a D2D server 150 between a UE 110 and a UE 115, in accordance with various embodiments. The UE 110 may be adapted to provide a resource and may, therefore, be referred to as the resource-providing UE 110. The UE 115 may be adapted to request a resource and may, therefore, be referred to as the resource-requesting UE 115. In FIG. 1, the first UE 110 is described as adapted to provide a resource and the second UE 115 is described as adapted to request a resource; however, it should be appreciated that both UEs 110, 115 may both provide and request a resource - that is, the second UE 115 may also be adapted to provide a resource to the first UE 110 and the first UE 110 may also be adapted to request a resource from the second UE 115.

The UEs 110, 115 may be any type of portable computing device equipped with mobile broadband circuitry, such as a netbook, a tablet computer, a handheld computing device, a web-enabled appliance, a gaming device, a mobile phone, a smartphone, an eBook reader, a personal data assistant, or the like. The UEs 110, 115 may be any devices adapted to communicate over a network (e.g., network 130) according to, for example, one or more 3^{rd} Generation Partnership Project ("3GPP") technical specifications.

The UEs 110, 115 may be adapted to circumvent an access node (not shown) to directly communicate data using wireless resources according to D2D communication standards defined by, for example, one or more 3GPP technical specifications. D2D communication may improve functionality and/or services available at the UEs 110, 115 by, for example, increasing bandwidth. The UEs 110, 115 may be relatively proximate to one another in the environment 100, so that D2D communication may allow for increased data transfer (e.g., high bit rates) that may correspond to decreased power consumption and/or latency. However, network assistance may facilitate this D2D communication, for example, through the D2D server 150.

The first UE 110 may be adapted to provide a resource to the second UE 115 based on a request from the second UE 115. According to one embodiment, this resource may be, for example, content such as a file (e.g., a text file, a media file, a torrent file). The first UE 110 may execute an application that is associated with provision of this content, such as a file-sharing application, P2P application, BitTorrent application, or the like. Such an application may be associated with a descriptor, which may be an application identifier (e.g., an application identifier value and/or application name). In another embodiment, this resource may be a service, such as file browsing. The first UE 110 may have a descriptor associated with provision of the service, such as a user identifier (e.g., a username and/or email address).

According to embodiments, the first UE 110 may determine a plurality of hash values associated with provision of the resource. A descriptor hash value may be determined based on a descriptor associated with provision of a resource by the first UE 110. The descriptor hash value may be predefined (e.g., stored in a data structure), such as where the descriptor hash value is hardcoded in association with an application. In another embodiment, the first UE 110 may generate the descriptor hash value, such as by applying a nonreversible hash function to the descriptor. A resource hash value may be determined based on the resource to be provided by the first UE 110. Similar to the descriptor hash value, this resource hash value may be predefined or may be generated based on a label associated with the resource, such as a file name (e.g., "file.txt") or a service name (e.g., "file browsing"). Further, the first UE 110 may determine a port associated with the provision of the resource by the UE. The port may serve as a communication endpoint for an operating system to be executed by the UE, such as for P2P communication. In various embodiments, the port may be specific to an application, such as a port at which the resource is available for provision.

The second UE 115 may be adapted to request a resource available at the first UE 110. The second UE 115 may execute an application that is associated with requesting of the resource, such as a file-sharing application, P2P application, BitTorrent application, or the like. In some embodiments, this application may be adapted to request the resource from a corresponding application at the first UE 110.

According to embodiments, the second UE 115 may determine a plurality of hash values associated with the requesting of the resource. A descriptor hash value may be determined based on a descriptor associated with requesting of a resource by the second UE 115. The descriptor hash value may be predefined (e.g., stored in a data structure), such as where the descriptor hash value is hardcoded in association with an application. In another embodiment, the second UE 115 may generate the descriptor hash value, such as by applying a nonreversible hash function to a descriptor. This resource hash value may be determined based on the resource to be provided by the first UE 110. Similar to the descriptor hash value, this resource hash value may be predefined or may be generated based on a label associated with the resource.

Preferably, a hash value determined by the second UE 115 is to match a hash value determined by the first UE 110 where the second UE 115 requests a resource with an associated descriptor provided by the first UE 110. In one embodiment, the first UE 110 and the second UE 115 may have stored therein respective hash values generated using a same nonreversible hash algorithm. For example, where the second UE 115 requests a resource having the label "file.torrent" and associated descriptor "BitTorrent," the second UE 115 may determine a resource hash value "A9B8C7" and a descriptor hash value "1Z2Y3X." In order to provide the resource to the second UE 115 in response to a request, the first UE 110 may correspondingly determine a respective resource hash value "A9B8C7" for the available resource "file.torrent" and a respective descriptor hash value "1Z2Y3X" for the associated descriptor "BitTorrent."

According to embodiments, the UEs 110, 115 may be configured for intersystem communication across the network 130. The network 130 may be a public, private, wireless, or hybrid network, or a combination of different types of networks that may include, for example, a local area network ("LAN"), a wide area network ("WAN") such as the Internet, a corporate intranet, a metropolitan area network ("MAN"), a public land mobile network ("PLMN"), and the like. The network 130 may include a wireless cellular network, such as a Global System for Mobile Communications ("GSM") network and/or a code division multiple access ("CDMA") network. A wireless cellular network may adhere to one or more standards, such as Long Term Evolution ("LTE") or LTE-Advanced ("LTE-A"), third Generation ("3G"), fourth Generation ("4G"), fifth Generation ("5G"), Worldwide Interoperability for Microwave Access ("WiMAX") (e.g., mobile WiMAX), or other similar standard.

In various embodiments, a wireless cellular network included in the network 130 may be administrated by a mobile network operator ("MNO"), such as an MNO responsible for radio spectrum allocation, wireless network infrastructure, back haul infrastructure, and the like. Accordingly, the network 130 may include a plurality of components (not shown) associated with providing a wireless cellular network, such as an access node (e.g., an evolved Node B ("eNB"), a femtocell, a picocell, etc.), a mobility management entity ("MME"), a serving gateway ("S-GW"), a packet data network gateway ("P-GW"), a gateway mobile location center ("GMLC"), a home location register ("HLR"), a home subscriber server ("HSS"), a mobile switching center ("MSC"), and other similar components.

Across the network 130, the UEs 110, 115 may be able to communicate with the D2D server 150. According to embodiments, the D2D server 150 may communicate with the UEs 110, 115 over, for example, a user plane or a control plane. For example, the D2D server 150 may communicate with the UEs 110, 115 via an MME and/or non-access stratum ("NAS") messaging. The D2D server 150 may manage one or more aspects associated with the UEs 110, 115. In various embodiments, the D2D server 150 may be part of an Evolved Packet Core ("EPC"), which may be a core network of an LTE system.

While D2D communication may be a direct communication link between the UEs 110, 115, D2D communication may benefit from network assistance through the D2D server 150. In some embodiments, the D2D server 150 may assign and/or store respective hardware addresses associated with the UEs 110, 115. A hardware address may be, for example, a unique identifier for a UE. The D2D server 150 may register the UEs 110, 115, authorize the UEs 110, 115 for D2D connections, and/or facilitate D2D connection establishment.

In various embodiments, the D2D server 150 may access or track the locations of the UEs 110, 115, and therefore may perform proximity detection on behalf of the UEs 110, 115. Such locations services may allow a requesting UE (e.g., the second UE 115) to transition into an idle state until the D2D server 150 detects that a providing UE (e.g., the first UE 110) is suitably proximate for D2D communication, effectively relieving the requesting UE of operations associated with continuously probing a discovery channel for the presence of the providing UE. Additionally, the D2D server 150 may allocate UE identifiers (e.g., temporary link layer identifiers) to the UEs 110, 115 for use on a D2D channel - e.g., the UEs 110, 115 may identify themselves with application layer identifiers ("application IDs"), but the D2D server 150 may store and/or allocate one or more link layer identifiers ("link layer IDs") (e.g., temporary and/or permanent link layer IDs) for the UEs 110, 115, and/or allow the UEs 110, 115 to use temporary link layer IDs on the D2D channel 120 so that the UEs 110, 115 may operate anonymously, particularly with respect to one or more other UEs (not shown) unengaged in that D2D communication.

As the UEs 110, 115 may participate in resource communication, the UEs 110, 115 may be adapted to transmit resource-related information over the network 130, such as application IDs, offered resources, descriptors associated with offered resources (e.g., application names, usernames, user identifiers), one or more passwords associated with the UEs 110, 115 (e.g., application-specific passwords, service-specific passwords), and other resource-related information (e.g., application-specific information, service-specific information). According to one embodiment, the UEs 110, 115 may transmit this resource-related information to the D2D server 150 so that the D2D server 150 may store this resource-related information. In an alternative embodiment, the UEs 110, 115 may transmit this resource-related information to another server (not shown), such as a cloud server and/or P2P server, with which the D2D server 150 may be adapted to communicate.

In connection with facilitating resource communication between the UEs 110, 115, the first UE 110 (e.g., the UE adapted to provide a resource) may transmit a plurality of hash values to the D2D server 150. To indicate a resource available for provision by the first UE 110, a resource hash value and a descriptor hash value may be transmitted over the network 130 to the D2D server 150 along with the port associated with provision of the resource. In embodiments, the first UE 110 may transmit a plurality of resources and/or descriptor hash values (and associated port(s)) to the D2D server 150 where the first UE 110 has a plurality of resources for provision. The D2D server 150 may store these hash values and associated ports(s) and link them to the hardware address associated with the first UE 110 - e.g., the D2D server 150 may access a database and store this data in one or more tables that may be at least partially keyed by the hardware address. Because the D2D server 150 is also associated with hardware management of the first UE 110, the D2D server 150 may resolve one or more IP addresses associated with the first UE 110 associated with resource provision (e.g., a Wi-Fi interface IP address and/or a cellular interface IP address). The one or more IP addresses may additionally be stored and linked to the hardware address. Therefore, the D2D server 150 may maintain a list of resource(s), descriptor(s), port(s), and IP address(es) available for provision by the first UE 110 while remaining agnostic to what those with the available resource(s) and/or descriptors actually are - that is, the D2D server 150 may only store and/or index the hash values that represent the resource(s) and/or descriptor(s) without storing and/or indexing any data and/or metadata (e.g., textual descriptions) of the resource(s) and/or descriptor(s) themselves.

Where the second UE 115 wishes to request a resource having an associated descriptor, the second UE 115 may transmit at least one hash value corresponding to a requested resource and/or descriptor to the D2D server 150. That is, the second UE 115 may determine a resource hash value and/or determine a descriptor hash value and transmit those hash values over the network 130 to the D2D server 150. In one embodiment, the second UE 115 may transmit a request having only one hash value while a "wildcard" comprises the second hash value, where the "wildcard" is to match all possible values (e.g., so that the second UE 115 may request all resources associated with a descriptor, such as all torrent files associated with a BitTorrent descriptor).

Based on a request from the second UE 115, the D2D server 150 may be adapted to match the requested resource hash value from the second UE 115 to the available resource hash value from the first UE 110 and, additionally, match the requested descriptor hash value from the second UE 115 to the available descriptor hash value from the first UE 110. For example, the D2D server 150 may query one or more database tables based on the requested hash values and the result of the query may return the available hash values associated with the first UE 110. From the query result, the D2D server 150 may be adapted to identify an IP address and a port of the first UE 110 associated with the provision of the resource.

In some embodiments, a request from the second UE 115 may cause the D2D server 150 to identify a plurality of IP addresses associated with one or more UEs (including the first UE 110), such as where the hash values provided in the request from the second UE 115 correspond to a resource and/or descriptor available at a plurality of UEs and/or a plurality of radio interfaces associated with the first UE 110. In response, the D2D 150 may be adapted to identify one or more of the IP addresses (and associated port(s)) based on one or more parameters, for example, location information for a UE that is most proximate to the second UE 115 and/or a preferred radio interface associated with the first UE 110. In various embodiments, the second UE 115 may indicate the one or more parameters in the request to the D2D server 150. For example, the one or more parameters may define a location restriction (e.g., a maximum proximity) and/or a timing restriction (e.g., a timeframe in which the resource is to be provided).

Subsequently, the D2D server 150 may transmit connectivity information to the second UE 115 for provision of the resource by the first UE 110. This connectivity information may include the identified IP address and port of the first UE 110, thereby allowing the second UE 115 to access the resource - e.g., an application of second UE 115 may access the resource of the first UE 110 at the identified IP address and port, such as for P2P communication. However, the D2D server 150 may adapt this resource provision to a D2D communication, for example, to improve bandwidth consumption and bitrate. Thus, various embodiments feature operations by the D2D server 150 for the performance of D2D discovery on behalf of the second UE 115. For example, the D2D server 150 may detect that the UEs 110, 115 are sufficiently proximate to engage in D2D communication based on location data associated with the first and second UEs 110, 115. Further, the D2D server 150 may facilitate the D2D connection establishment between the UEs 110, 115. For example, the D2D server 150 may facilitate allocation of the D2D channel 120. In addition, the D2D server 150 may allocate respective UE identifiers (e.g., temporary link layer IDs) to the UEs 110, 115 for D2D communication over the D2D channel 120. Therefore, the UEs 110, 115 may use application IDs for provision of the resource based on the IP address and port at which the resource is available from the first UE 110, while using allocated UE identifiers on the D2D channel 120.

This arrangement based on utilizing hash space for resource provision may offer some features that may be absent from storage and/or indexing based on textual descriptions for resource provision. For example, a D2D server 150 operating in hash space may be flexible and extensible - that is, hash space operations according to this protocol may not need to be changed as new resources and/or descriptors are introduced. Also, the hash space provides the UEs 110, 115 with anonymity because the UEs 110, 115 do not indicate to the D2D server 150 what resources and/or descriptors are being provided and/or requested. From a system perspective, the hash space operations may be appreciably efficient on the network 130, the D2D server 150, and the UEs 110, 115 because less data is exchanged between the UEs 110, 115 and the D2D server 150 (e.g., hash values require less network transmission overhead than textual descriptions of resources and/or descriptors) and less data storage and/or processing is required (e.g., hash values require less storage and/or indexing than textual descriptions of resources and/or descriptors). Furthermore, potentially expensive search operations associated with searching for resources and/or descriptors may be absent from the D2D server 150 and made available through, for example, Internet-based search engines.

According to one embodiment, a uniform naming scheme may be used for the first UE 110 to indicate an available resource and/or descriptor and, correspondingly, for the second UE 115 to request such a resource and/or descriptor. This name scheme may be a uniform resource identifier ("URI"). For example, a URI may be of a form like "d2d://d2d.operator.com/[descriptor hash value]/[resource hash value]/." Where the first UE 110 is to indicate a resource available for provision, the first UE 110 may cause such a URI to be published by, for example, a web browser on a website, on a social media platform, and/or another application at which a URI may be invoked. In one embodiment, first UE 110 may include additional values in the URI, such as one or more parameters (e.g., location and/or timing restrictions that may be critical for D2D communication) and/or information associated with targeting a specific resource (e.g., a file hierarchy or archive so that a resource inside a file hierarchy may still be provided). Thus, the URI may be extended to, for example, "d2d://d2d.operator.com/[descriptor hash value]/[resource hash value]/<specific_target>/?parameter1=val1,parameter2=val2." Further, this URI notation may support "wildcard" characters, so that a descriptor hash value and/or resource hash value may be replaced with the "wildcard" to cause all resources associated with the specified descriptor hash value or all descriptors associated with a specified resource hash value to be identified at the D2D server 150. Where the second UE 115 wishes to request a resource and associated descriptor, the second UE 115 may determine the resource hash value and the descriptor hash value through invocation of the URI (e.g., selection of the URI at a website). Such a URI may comprise the request transmitted by the second UE 115 to the D2D server 150.

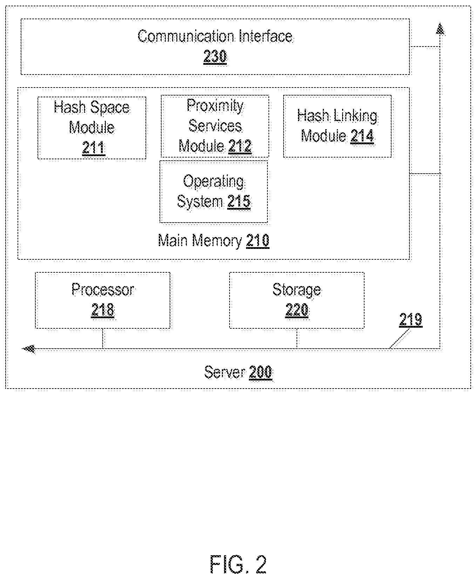

With respect to FIG. 2, a block diagram illustrates a server 200 for facilitating D2D communication between UEs based on hash space. The server 200 may be any server adapted to manage one or more UEs in a network and/or assist a plurality of UEs in D2D communication, such as the D2D server 150 of FIG. 1. The server 200 may include, but is not limited to, processor 218, storage 220, a main memory 210, and a communication interface 230. These components may be communicatively coupled through a bus 219. The bus 219 may be any subsystem adapted to transfer data within the server 200. The bus 219 may include a plurality of computer buses as well as additional circuitry adapted to transfer data.

The processor 218 may be any processor suitable to execute instructions, such as instructions from the main memory 210. Accordingly, the processor 218 may be, for example, a central processing unit ("CPU"), a microprocessor, or another similar processor. In some embodiments, the processor 218 includes a plurality of processors, such as a dedicated processor (e.g., a graphics processing unit), a network processor, or any processor suitable to execute operations of the server 200.

Coupled to the processor 218 is the main memory 210. The main memory 210 may offer both short-term and long-term storage and may in fact be divided into several units (including a unit located at the processor 218). The main memory 210 may also include cache memory, such as a cache located at the processor 218. The main memory 210 may be volatile, such as static random access memory ("SRAM") and/or dynamic random access memory ("DRAM"), and may provide storage (at least temporarily) of computer-readable instructions, data structures, software applications, and other data for the server 200. Such data may be loaded from the storage 220, which may be, for example, one or more hard disk drives, solid state drives, compact disks and drives, digital versatile disks and drives, and the like.

The main memory 210 may include, but is not limited to, instructions related to the components 211-215 that are to be executed by the processor 218: a hash space module 211, a proximity services module 212, a hash linking module 214, and an operating system 215. In various embodiments, the operating system 215 is configured to initiate the execution of the instructions, such as instructions provided by a module 211-214. The operating system 215 may be adapted to perform other operations across the components of the server 200, including threading, resource management, data storage control, and other similar functionality. The operating system 215 may cause the processor 218 to execute instructions. In various embodiments, the modules 211-214 may be implemented at least partially in circuitry of the server 200, such as processing circuitry, processor circuitry, logic circuitry, and the like. Thus, for example, hash space circuitry may include circuitry configured to perform various operations described with respect to the hash space module 211.

According to embodiments, the server 200 may be adapted to store data associated with one or more UEs. This data may be received through the communication interface 230 over a network, such as a wireless cellular network. The hash linking module 214 may process a plurality of hash values, received via the communication interface 230, associated with a UE that is adapted to provide a resource (e.g., content or a service). Further, the hash linking module 214 may process a port, received from the UE through the communication interface 230, associated with the plurality of hash values. The hash linking module 214 may be adapted to store the hash values and the associated port in the storage 220 and link them to a hardware address associated with the UE. The hardware address may be any identifier that the server 200 may use to identify the UE, for example, with respect to hardware management and/or D2D communication. In embodiments, the server 200 may detect one or more IP addresses, associated with the UE providing the hash values and port, which indicate one or more radio interfaces of the UE. The hash linking module 214 may additionally store the one or more detected IP addresses and link the same to the hardware address of the UE. Accordingly, the server 200 may maintain a list of resource(s), descriptor(s), port(s), and IP address(es) available for provision by a UE while remaining agnostic to what those with the available resource(s) and/or descriptors actually are - that is, the D2D server 150 may only store and/or index the hash values that represent the resource(s) and/or descriptor(s) without storing and/or indexing any data and/or metadata (e.g., textual descriptions) of the resource(s) and/or descriptor(s) themselves.

In connection with the hash values linked and stored by the hash linking module 214, the hash space module 211 may be adapted to match received requests that include hash values to stored hash values. The hash space module 211 may receive a plurality of hash values through the communication interface 230 as a request for a resource. In many embodiments, any indication of the resource or associated descriptor is absent from the request, because the server 200 may not store and/or index information associated with the textual descriptions of resources and/or descriptors. In some embodiments, the hash space module 211 may process a request that includes one or more parameters associated with provision of the resource and/or D2D communication. In one embodiment, the hash space module 211 may process a request that is received through the communication interface 230 based on a URI.

Based on a request received through the communication interface 230, the hash space module 211 may be adapted to match the requested hash values to the stored hash values. In various embodiments, the request may include two hash values, and the hash space module 211 may be adapted to match the first requested hash value to a first stored hash value and the second requested hash value to a second stored hash value, where the first and second stored hash values are associated with a same hardware address. From the matching, the hash space module 211 may be adapted to identify an IP address and a port, as well as a hardware address, associated with the provision of the resource by a providing UE.

The proximity services module 212, communicatively coupled with the hash space module 211, may determine if a UE associated with the identified hardware address is adapted for D2D communication with the requesting UE. In various embodiments, the proximity services module 212 may perform D2D discovery, such as by determining that the UEs are sufficiently proximate based on location information derived based on respective hardware addresses associated with the UEs. The proximity services module 212 may further determine that the two UEs are adapted to engage in D2D communication based on a timing parameter. While the proximity services module 212 is shown as part of the server 200, in other embodiments, the proximity services module 212 may be remotely disposed, e.g., in another part of a core network, and communicate with components of the server 200 through the communication interface 230.

Based on a determination that the UEs are adapted to engage in D2D communication with one another, the proximity services module 212 may cause the communication interface 230 to transmit connectivity information to the requesting UE. In various embodiments, this connectivity information may include the identified IP address and port of the UE identified from the requested hash values, so that the requesting UE may use this information to access a resource provided by the identified UE. In addition, proximity services module 212 may allocate respective UE identifiers (e.g., temporary link layer IDs) to the requesting UE and/or the identified UE for D2D communication, which may be communicated in the connectivity information. Therefore, the server 200 may provide network assistance for D2D communication of a resource between two UEs.

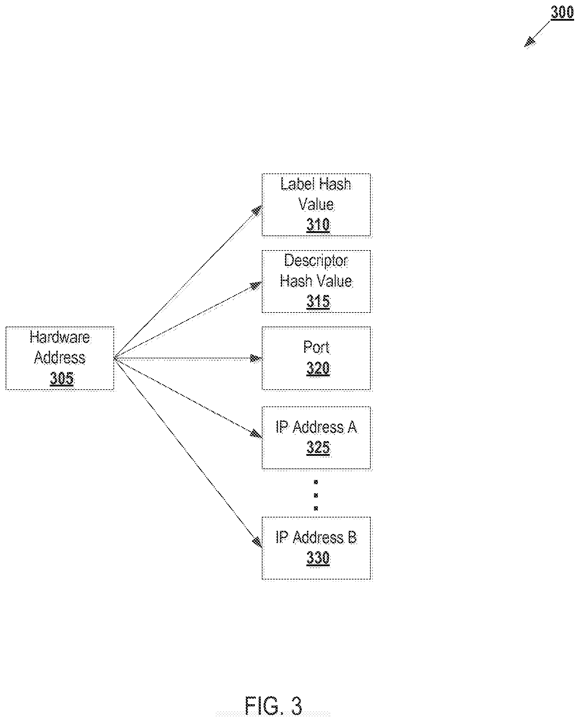

With respect to FIG. 3, a block diagram of a record 300 for hardware management associated with hash space is illustrated. The record 300 may be stored with respect to a UE in the storage 220 of the server 200 illustrated in FIG. 2. In various embodiments, a plurality of records similar to the record 300 is stored for a plurality of UEs having one or more resources to provide. The record 300 may be, for example, stored in one or more data structures, such as a database record.

The record 300 may be at least partially identifiable by a hardware address 305. The hardware address 305 may be unique to a UE. In various embodiments, the hardware address 305 may be assigned to a UE based on D2D communication (e.g., a hardware address may be assigned to indicate that one of the UEs 110, 115 is authorized for D2D communication) and, therefore, a hardware address may be different from an international mobile subscriber identity ("IMSI") and/or a temporary mobile subscriber identity ("TMSI").

The hardware address may be associated with a plurality of hash values 310-315. A first hash value 310 may be associated with a label for a resource (e.g., a file name or service name), while a second hash value 315 may be associated with a descriptor for provision of the resource (e.g., an application name or a username). The label hash value 310 and the descriptor hash value 315 may be generated according to a same hash algorithm or different hash algorithms, which may be nonreversible. The label hash value 310 and the descriptor hash value 315 may be generated to a specific predetermined length or constrained to a maximum length to save storage space.

The hardware address 305 may further be associated with a port 320, which may serve as a communication endpoint at the UE and may be, for example, a numerical value. Additionally, the hardware address 305 may be associated with one or more IP addresses 325-330. The IP addresses 325-330 may be resolved by a server that is to manage the hardware (e.g., radio interface(s)) associated with one or more UEs. Because a UE may include a plurality of radio interfaces, a plurality of IP addresses 325-330 may be associated with the hardware address 305.

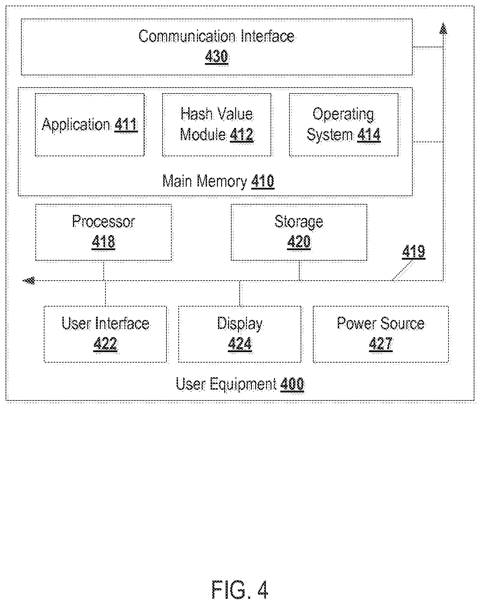

With respect to FIG. 4, a block diagram illustrates a UE 400 adapted for resource communication over a D2D channel. The UE 400 may be any UE adapted to transmit and/or request a resource based on D2D communication, such as the UEs 110, 115 of FIG. 1. The UE 400 may include, but is not limited to, processor 418, storage 420, a main memory 410, a user interface 422, a display 424, a power source 427, and a communication interface 430. One or more of these components may be communicatively coupled through a bus 419. The bus 419 may be any subsystem adapted to transfer data within the UE 400. The bus 419 may include a plurality of computer buses as well as additional circuitry adapted to transfer data.

As a means of receiving data, the UE 400 may include a user interface 422 to receive input from a user. The user interface 422 may allow a user to interact with the UE 400 through various means, according to different embodiments - e.g., the user interface 422 may be presented to a user on a display 424 as a graphical user interface or through a command line interface. To receive user input, the user interface 422 may be implemented in hardware, software, or a combination of the two and may include or may be communicatively coupled with one or more hardware devices suitable for user input (e.g., a keyboard, mouse, touch screen, or gesture recognition). Further, the processor 418 may execute some or all of the instructions for the user interface 422.

The processor 418 may be any processor suitable to execute instructions, such as instructions from the main memory 410. Accordingly, the processor 418 may be, for example, a central processing unit ("CPU"), a microprocessor, or another similar processor. In some embodiments, the processor 418 includes a plurality of processors, such as a dedicated processor (e.g., a graphics processing unit), a network processor, or any processor suitable to execute operations of the UE 400.

Coupled with the processor 418 is the main memory 410. The main memory 410 may offer both short-term and long-term storage and may in fact be divided into several units (including a unit located at the processor 418). The main memory 410 may be volatile, such as static random access memory ("SRAM") and/or dynamic random access memory ("DRAM"), and may provide storage (at least temporarily) of computer-readable instructions, data structures, software applications, and other data for the UE 400. Such data may be loaded from the storage 420. The main memory 410 may also include cache memory, such as a cache located at the processor 418. The main memory 410 may include, but is not limited to, instructions related to the components 411-414 that are to be executed by the processor 418: an application 411, hash value module 412, and an operating system 414.

In various embodiments, the operating system 414 may be configured to initiate the execution of the instructions, such as instructions provided by the application 411 and/or the hash value module 412. In particular, the operating system 414 may be adapted to serve as a platform for running the application 411. The operating system 414 may be adapted to perform other operations across the components of the UE 400, including threading, resource management, data storage control, and other similar functionalities that may be associated with the application 411 and/or the hash value module 412.

The operating system 414 may cause the execution of instructions associated with the application 411. The application 411 may be any application associated with a resource, such as a content or service. For example, the application 411 may be a P2P application, a file-sharing application, a BitTorrent application, or the like. The application 411 may be associated with a descriptor, which may be, for example, a name or other identifier of the application, and/or a username associated with a user of the application 411. According to an embodiment, the resource adapted to be provided by the application 411 is content, such as a file. According to another embodiment, the resource adapted to be provided by the application is a service, such as file browsing.

The application 411 may be communicatively coupled with the hash value module 412. Although illustrated as within main memory 410, the hash value module 412 may be hardware, software, firmware, and/or a combination of such. For example, the hash value module 412 may be included in an ASIC or other integrated circuit. In many embodiments, instructions associated with the hash value module 412 are to be executed by the processor 418 and, therefore, instructions associated with the hash value module 412 may be stored, at least temporarily, in main memory 410. In various embodiments, the hash value module 412 may be implemented at least partially in circuitry of the UE 400, such as processing circuitry, processor circuitry, logic circuitry, and the like. Thus, for example, hash value circuitry may include circuitry configured to perform various operations described with respect to the hash value module 412.

The hash value module 412 may be adapted to generate a plurality of hash values. In one embodiment, the hash value module 412 may be adapted to generate a first hash value based on a descriptor associated with provision of a resource by a UE 400. For example, the first hash value may be generated based on a descriptor that is an application identifier (e.g., an application name or an application identification number) associated with the application 411 that is to provide the resource (e.g., content). In another embodiment, the first hash value may be based on a descriptor that is a user identifier (e.g., a username or a user electronic mail address) associated with the resource (e.g., service).

According to one embodiment, hash value module 412 may determine the first hash value from a stored value (e.g., a hardcoded value). In another embodiment, the hash value module 412 may generate the first hash value by applying a nonreversible hash function to the descriptor. The hash value module 412 may cause the first hash value to be constrained to a maximum or specifically predetermined length. This first hash value may be generated to be unique to a descriptor - e.g., a hash function applied to the characters and/or values comprising the descriptor may generate the first hash value, but a different hash value would be generated where one or more characters and/or values are changed, transposed, added, and/or absent.

Similar to the first hash value, the hash value module 412 may determine a second hash value. The hash value module 412 may generate the second hash value based on the resource to be provided by the UE 400. In various embodiments, the hash value module 412 may generate the second hash value based on a label associated with the resource, such as a file name or a service name (e.g., "file browsing").

Like the first hash value, the hash value module 412 may determine the second hash value from a stored value (e.g., a hardcoded value). In another embodiment, the hash value module 412 may generate the second hash value by applying a nonreversible hash function to a label associated with the resource. This nonreversible hash function may be the same hash function as that used to generate the first hash value, although in other embodiments it may be a different hash function. The second hash value may be constrained to a maximum or specifically predetermined length. This second hash value may be generated to be unique to a label associated with the resource - e.g., a hash function applied to the characters and/or values comprising the label may generate the second hash value, but a different hash value would be generated where one or more characters and/or values are changed, transposed, added, and/or absent. In some embodiments, the second hash value may be generated further based on metadata associated with the resource (e.g., a file extension, a resource type, a resource size, or the like).

The hash value module 412 may further determine a port associated with provision of a resource by the UE. For example, the hash value module 412 may determine a port associated with the application 411 at which the resource may be communicated. The port may serve as a communication endpoint for the operating system 414, such as for P2P communication. The hash value module 412 may be communicatively coupled with the communication interface 430 and, therefore, the plurality of hash values and the port may be communicated over a network to a server (not shown) so that the UE 400 may indicate one or more resources available for provision. In various embodiments, the hash value module 412 may cause the communication interface 430 to transmit the plurality of hash values as a URI so that the link to the resource to be provided by the UE 400 may be published on, for example, a website. This URI may include one or more other values associated with the provision of the resource, such as a file hierarchy or archive at which the resource is available. The URI may further include on or more parameters associated with the provision of the resource, such as D2D parameters associated with location and/or timing restrictions.

The hash value module 412 may be adapted to perform similar operations for requesting a resource from another UE - that is, the hash value module 412 may determine a plurality of hash values associated with the requested resource. The hash value module 412 may determine a first requested hash value based on a descriptor. In one embodiment, the hash value module 412 may determine this first requested hash value from a stored value. In another embodiment, hash value module 412 may generate the first requested hash value based on application of a hash algorithm to the descriptor. The hash value module 412 may cause the first requested hash value to be constrained to a maximum or specifically predetermined length. This first requested hash value may be generated to be unique to a descriptor - e.g., a hash function applied to the characters and/or values comprising the descriptor may generate the first hash value, but a different hash value would be generated where one or more characters and/or values are changed, transposed, added, and/or absent.

The hash value module 412 may additionally determine a second requested hash value in association with requesting a resource. The hash value module 412 may determine this second requested hash value from a stored value (e.g., a hardcoded value). In another embodiment, the hash value module 412 may generate the second hash value by applying a nonreversible hash function to a label associated with the resource. This nonreversible hash function may be the same hash function as that used to generate the first requested hash value, although in other embodiments it may be a different hash function. The hash value module 412 may generate the second requested hash value so that it is constrained to a maximum or specifically predetermined length. The hash value module 412 may generate the second requested hash value so that it is unique to a label associated with the resource - e.g., a hash function applied to the characters and/or values comprising the label may generate the second hash value, but a different hash value would be generated where one or more characters and/or values are changed, transposed, added, and/or absent. In some embodiments, the hash value module 412 may generate the second requested hash value further based on metadata associated with the resource (e.g., a file extension, a resource type, a resource size, or the like).

The hash value module 412 may cause the communication interface 430 to transmit the first and second requested hash values to a server over a network, for example, as a request for a resource from another UE. In various embodiments, the communication interface 430 may transmit this request to a D2D server adapted to facilitate D2D communication by, for example, device discovery and/or D2D connection establishment. According to one embodiment, communication interface 430 may transmit this request based on invocation of URI, which may include the first hash value and the second hash value. In various embodiments, this URI may include other information associated with provision of the resource by the other UE and/or D2D communication, such as location and/or timing restrictions associated with D2D communication and/or file hierarchy (e.g., archive) information for retrieval of the resource.

Based on the request, the communication interface 430 may process connectivity information associated with provision of the resource by another UE. The communication interface 430 may receive the connectivity information from a D2D server based on the transmitted request. In various embodiments, the connectivity information may include information associated with device discovery and/or connection establishment for D2D communication with the other UE, such as a UE identifier associated with the other UE and/or information associated with a D2D channel. According to an embodiment, the connectivity information may include an IP address and a port associated with the other UE so that the UE may consume the resource provided by the other UE. The application 411 may be adapted to use some connectivity information (e.g., the IP address and the port) to consume the resource provided by the other UE. In various embodiments, the communication interface 430 may use some connectivity information for D2D communication with the other UE, although this D2D communication may be assisted by a network server.

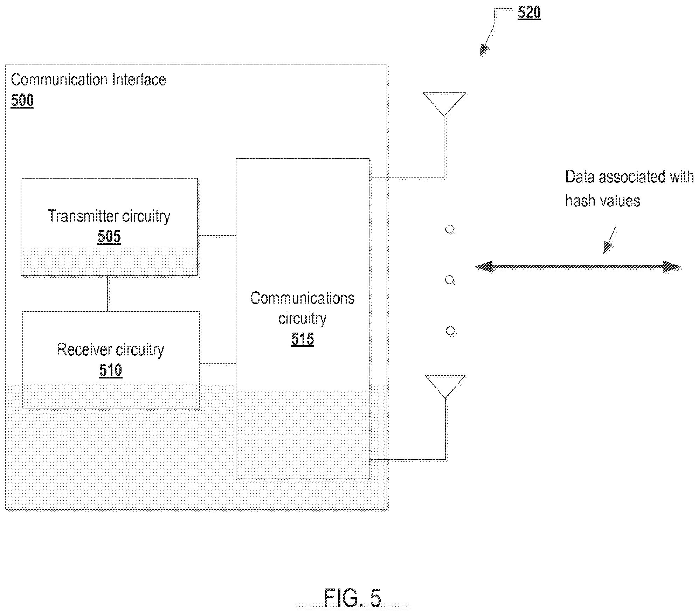

With respect to FIG. 5, a block diagram illustrates a communication interface 500 for wireless reception and transmission of data between computing systems, in accordance with various embodiments. The communication interface 500 may be or may be included in a server and/or UE, such as the communication interface 230 of FIG. 2 and/or the communication interface 430 of FIG. 4. The communication interface 500 may include, but is not limited to, transmitter circuitry 505, receiver circuitry 510, communications circuitry 515, and/or one or more antennas 520 coupled with each at least as shown.

Briefly, the communications circuitry 515 may be coupled with the antennas 520 to facilitate over-the-air communication of signals to/from the communication interface 500. Operations of the communications circuitry 515 may include, but are not limited to, filtering, amplifying, storing, modulating, demodulating, transforming, etc.

The transmitter circuitry 505 may be coupled with the communications circuitry 515 and may be configured to provide signals to the communications circuitry 515 for transmission by the antennas 520. In various embodiments, the transmitter circuitry 505 may be configured to provide various signal processing operations on the signal to provide the signal to the communications circuitry 515 with appropriate characteristics. In some embodiments, the transmitter circuitry 505 may be configured to wirelessly transmit one or more data packets and/or analog voice data.

The transmitter circuitry 505 may be configured to receive signals for transmission by the communications circuitry 515. In some embodiments, the transmitter circuitry 505 may be adapted to generate signals. Further, the transmitter circuitry 505 may be adapted to scramble, multiplex, and/or modulate various signals prior to transmission by the communications circuitry 515.

The receiver circuitry 510 may be coupled with the communications circuitry 515 and may be configured to receive signals for and/or from the communications circuitry 515, such as signals detected by one or more antennas 520. In some embodiments, the receiver circuitry 510 may be adapted to generate, adapt, or otherwise change signals. Further, the receiver circuitry 510 may be adapted to send received signals to another module or component (not shown), communicatively coupled with the communication interface 500 so that data received from outside a device having the communication interface 500 may utilize that data at the device. In some embodiments, the receiver circuitry 510 may receive one or more data packets and/or analog voice data.

Some or all of the communications circuitry 515, transmitter circuitry 505, and/or the receiver circuitry 510 may be included in, for example, a communication chip and/or communicatively coupled with a printed circuit board.

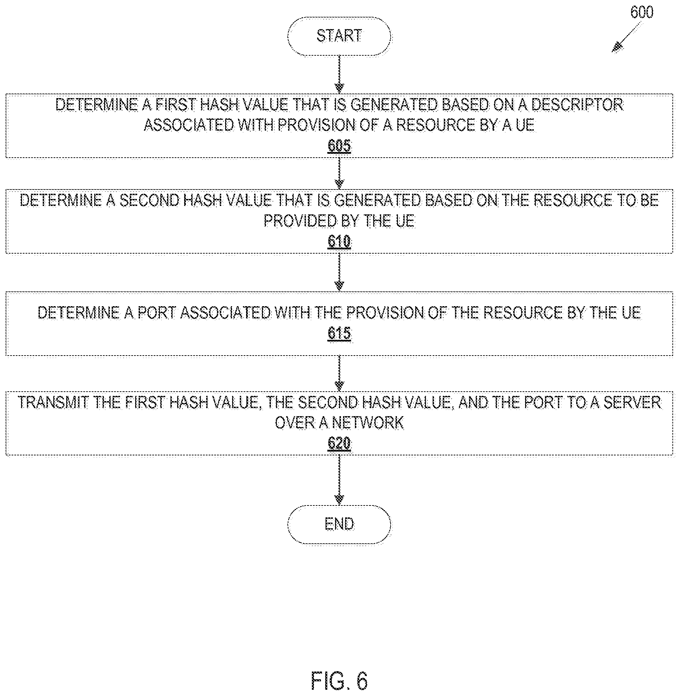

With respect to FIG. 6, a flow diagram illustrates a method 600 for transmitting a plurality of hash values associated with provision of a resource by a UE to facilitate D2D communication between the UE and another UE, in accordance with various embodiments. The method 600 may be performed by a computing device, such as one of the UEs 110, 115 of FIG. 1. While FIG. 6 illustrates a plurality of sequential operations, one of ordinary skill would understand that one or more operations of the method 600 may be transposed and/or performed contemporaneously.

To begin, the method 600 may include operation 605 for determining a first hash value. This first hash value may be generated based on a descriptor associated with provision of a resource by a UE. In one embodiment, the first hash value may be generated based on a descriptor that is an application identifier (e.g., an application name or an application identification number) associated with an application that is to provide the resource (e.g., content). In another embodiment, the first hash value may be based on a descriptor that is a user identifier (e.g., a username or a user electronic mail address) associated with the resource (e.g., service).

According to one embodiment, the first hash value may be predefined (e.g., stored in a data structure). In another embodiment, operation 605 may include generating the first hash value by applying a nonreversible hash function to the descriptor. The first hash value may be constrained to a maximum or specifically predetermined length. This first hash value may be generated to be unique to a descriptor - e.g., a hash function applied to the characters and/or values comprising the descriptor may generate the first hash value, but a different hash value would be generated where one or more characters and/or values are changed, transposed, added, and/or absent.

Operation 610 may include determining a second hash value. This second hash value may be generated based on the resource to be provided by the UE. In one embodiment, this resource may be content (e.g., a text file, a media file, a torrent file). In another embodiment, this resource may be a service (e.g., file browsing). In various embodiments, the second hash value may be generated based on a label associated with the resource, such as a file name or a service name (e.g., "file browsing").

According to one embodiment, the second hash value may be predefined (e.g., stored in a data structure). In another embodiment, operation 610 may include generating the second hash value by applying a nonreversible hash function to the label associated with the resource. This nonreversible hash function may be the same hash function as that used to generate the first hash value, although in other embodiments it may be a different hash function. The second hash value may be constrained to a maximum or specifically predetermined length. This second hash value may be generated to be unique to a label associated with the resource - e.g., a hash function applied to the characters and/or values comprising the label may generate the second hash value, but a different hash value would be generated where one or more characters and/or values are changed, transposed, added, and/or absent. In some embodiments, the second hash value may be generated further based on metadata associated with the resource (e.g., a file extension, a resource type, a resource size, or the like).

At operation 615, the method 600 may include determining a port associated with the provision of the resource by the UE. The port may serve as a communication endpoint for an operating system to be executed by the UE, such as for peer-to-peer communication. In various embodiments, the port may be specific to an application, such as an application that is to provide content or a service.

Subsequently, operation 620 may include transmitting the first hash value, the second hash value, and the port to a server over a network. Operation 620 may facilitate D2D communication between the UE and another UE. For example, operation 620 may include transmitting the first and second hash values and the port to a server adapted to facilitate D2D communication. In one embodiment, operation 620 may include transmitting the first and second hash values and the port to a web server as a URI to be published for another UE, and invocation of the URI may cause a D2D server to enable D2D communication between the UE and the other UE (e.g., by facilitating discovery and/or transmitting an IP address associated with the UE and the port to the other UE).

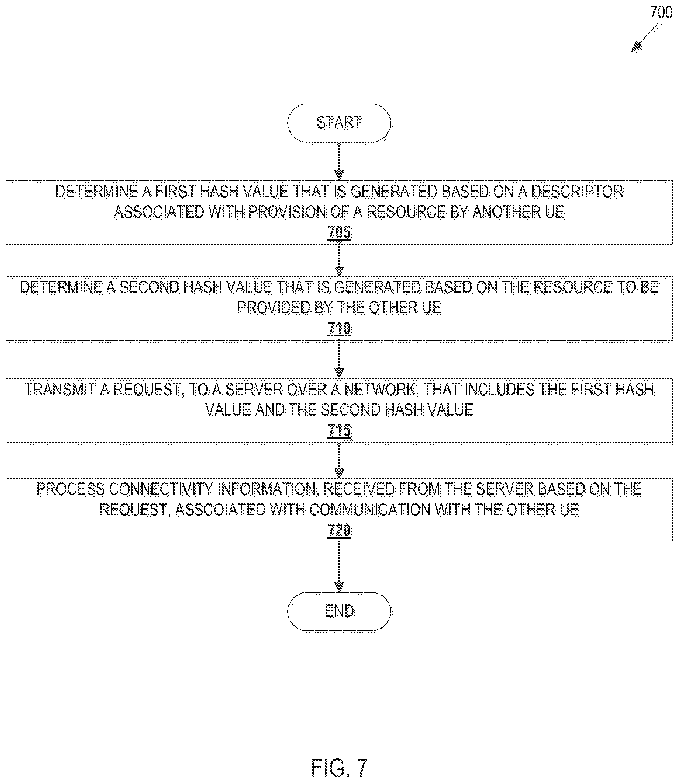

With respect to FIG. 7, a flow diagram illustrates a method 700 for requesting provision of a resource via D2D communication based on a plurality of hash values, in accordance with various embodiments. The method 700 may be performed by a computing device, such as one of the UEs 110, 115 of FIG. 1. While FIG. 7 illustrates a plurality of sequential operations, one of ordinary skill would understand that one or more operations of the method 700 may be transposed and/or performed contemporaneously.

To begin, the method 700 may include operation 705 for determining a first hash value. This first hash value may be generated based on a descriptor associated with provision of a resource by another UE. In one embodiment, the first hash value may be generated based on a descriptor that is an application identifier (e.g., an application name or an application identification number) associated with an application that is to provide the resource (e.g., content). In another embodiment, the first hash value may be based on a descriptor that is a user identifier (e.g., a username or a user electronic mail address of a user associated with the other UE) associated with the resource (e.g., service).

According to one embodiment, the first hash value may be predefined (e.g., stored in a data structure). In another embodiment, operation 705 may include generating the first hash value by applying a nonreversible hash function to the descriptor. The first hash value may be constrained to a maximum or specifically predetermined length. This first hash value may be generated to be unique to a descriptor - e.g., a hash function applied to the characters and/or values comprising the descriptor may generate the first hash value, but a different hash value would be generated where one or more characters and/or values are changed, transposed, added, and/or absent.

Operation 710 may include determining a second hash value. This second hash value may be generated based on the resource to be provided by the other UE. In one embodiment, this resource may be content (e.g., a text file, a medial file, a torrent file) that the UE wishes to request from the other UE. In another embodiment, this resource may be a service (e.g., file browsing) that may be provided to the UE by the other UE. In various embodiments, the second hash value may be generated based on a label associated with the resource, such as a file name or a service name (e.g., "file browsing").

According to one embodiment, the second hash value may be predefined (e.g., stored in a data structure). In another embodiment, operation 710 may include generating the second hash value by applying a nonreversible hash function to the label associated with the resource. This nonreversible hash function may be the same hash function as that used to generate the first hash value, although in other embodiments it may be a different hash function. The second hash value may be constrained to a maximum or specifically predetermined length. This second hash value may be generated to be unique to a label associated with the resource - e.g., a hash function applied to the characters and/or values comprising the label may generate the second hash value, but a different hash value would be generated where one or more characters and/or values are changed, transposed, added, and/or absent. In some embodiments, the second hash value may be generated further based on metadata associated with the resource (e.g., a file extension, a resource type, a resource size, or the like).

At operation 715, the method 700 may include transmitting, to a server over a network, a request that includes the first hash value and the second hash value. In various embodiments, this request may be transmitted to a D2D server adapted to facilitate D2D communication by, for example, device discovery and/or D2D connection establishment. According to one embodiment, this request may comprise a URI. For example, operation 715 may include invoking a URI. This URI may include the first hash value and the second hash value. In various embodiments, this URI may include other information associated with provision of the resource by the other UE and/or D2D communication, such as location and/or timing restrictions associated with D2D communication and/or file hierarchy (e.g., archive) information for retrieval of the resource.

Subsequently, operation 720 may include processing connectivity information associated with communication with the other UE. This connectivity information may be received from a D2D server based on the transmitted request. Operation 720 may facilitate D2D communication between the UE and another UE. For example, the connectivity information may include information associated with device discovery and/or connection establishment for D2D communication with the other UE, such as a UE identifier associated with the other UE and/or information associated with a D2D channel. According to an embodiment, the connectivity information may include an IP address and a port associated with the other UE so that the UE may consume the resource provided by the other UE. In one example of such an embodiment, the UE may engage in P2P communication with the other UE, such as when both the UE and the other UE are adapted to execute respective P2P applications (e.g., the UE may execute a P2P application adapted to consume a resource provided by a corresponding P2P application executed by the other UE).

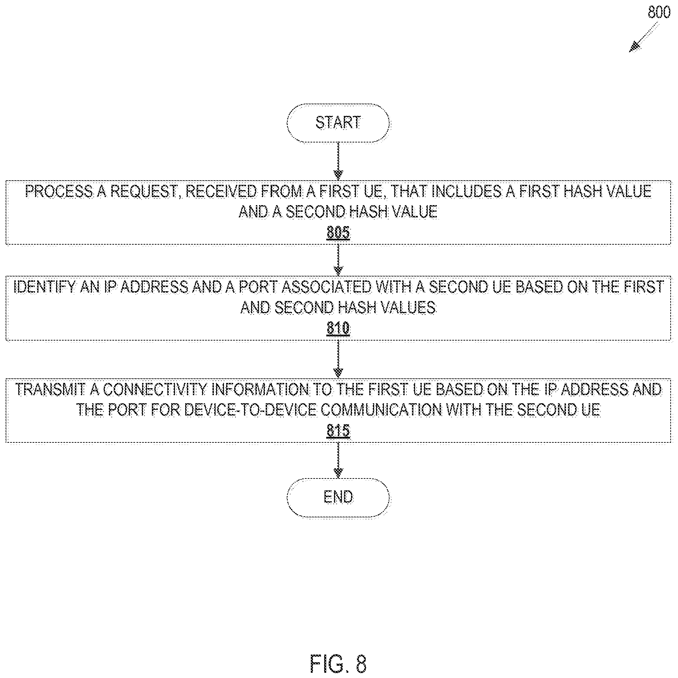

Turning to FIG. 8, a flow diagram illustrates a method 800 for providing a first UE with connectivity information associated with D2D communication based on a plurality of hash values, in accordance with various embodiments. The method 800 may be performed by a server computing system, such as the D2D server 150 of FIG. 1. While FIG. 8 illustrates a plurality of sequential operations, one of ordinary skill would understand that one or more operations of the method 800 may be transposed and/or performed contemporaneously.

To begin, the method 800 may include operation 805 for processing a request, received from a first UE, that includes a first hash value and a second hash value. In various embodiments, the first hash value may be generated based on a descriptor associated with provision of a resource by a second UE and the second hash value may be generated based on the resource to be provided by the second UE. However, the computing system performing the method 800 may be agnostic to the descriptor and/or the resource from which the first and second hash values are respectively generated. In various embodiments, the computing system performing the method 800 may not, in fact, store and/or index any data and/or metadata associated with the descriptor and/or resource so that overhead (e.g., storage and/or processor consumption) is reduced. To further reduce overhead, the first and second hash values may be constrained to a maximum or specifically predetermined length.

According to one embodiment, the received request may comprise a URI, such as where the first UE invokes a URI that is posted on a website. This URI may include the first hash value and the second hash value. In various embodiments, this URI may include other information associated with provision of the resource by the second UE and/or D2D communication, such as location and/or timing restrictions associated with D2D communication and/or file hierarchy (e.g., archive) information for retrieval of the resource.

Subsequently, operation 810 may include identifying an IP address and a port associated with the second UE based on the first and second hash values. In various embodiments, operation 810 may include operations associated with matching the first and second hash values to stored hash values. For example, the first hash value may be matched to a third hash value and the second hash value may be matched to a fourth hash value, where the third and fourth hash values are associated with a hardware address of the second UE. In such an example, the third and fourth hash values may be stored in a data structure associated with the IP address and the port (e.g., the third and fourth hash values may be stored with the IP address and the port in a database table keyed by the hardware address of the second UE).

According to embodiments, a plurality of IP addresses may be identified based on the first and second hash values. In one embodiment, a plurality of UEs may be adapted to provide the resource indicated by the first and second hash values included in the first UE's request. In such embodiments, operation 810 may include identifying one IP address (and associated port) of the plurality based on one or more parameters associated with D2D communication between the first UE and the second UE. For example, a plurality of IP addresses associated with a plurality of hardware addresses may be identified based on first and second hash values, and a hardware address associated with the second UE may be identified as further matching the one or more parameters (e.g., within a geographical range according to a location parameter, adapted to communicate data over a D2D connection within a timeframe or time rate according to a timing restriction, etc.). In some embodiments, the one or more parameters may be indicated in the request from the first UE (e.g., the one or more parameters may be included in a URI).

In various embodiments, a single UE may have associated therewith a plurality of IP addresses, such as where the second UE includes a plurality of radio interfaces (e.g., a Wi-Fi interface, a cellular interface, etc.). Accordingly, operation 810 may include identifying one IP address of the plurality associated with the second UE. This identification may comprise operations associated with determining an available and/or preferable (e.g., faster) radio interface and identifying the IP address associated with that determined radio interface.

Subsequently, operation 815 may include transmitting, to the first UE, connectivity information based on the IP address and the port. This connectivity information may comprise the identified IP address and the port. In various embodiments, this connectivity information may include information associated with D2D communication between the first UE and the second UE, such as information for device discovery (e.g., an identifier associated with the second UE for use on a D2D channel) and/or D2D connection establishment (e.g., information associated with a D2D channel). In effect, the computing system performing the method 800 may enable the first UE and the second UE to engage in D2D communication.

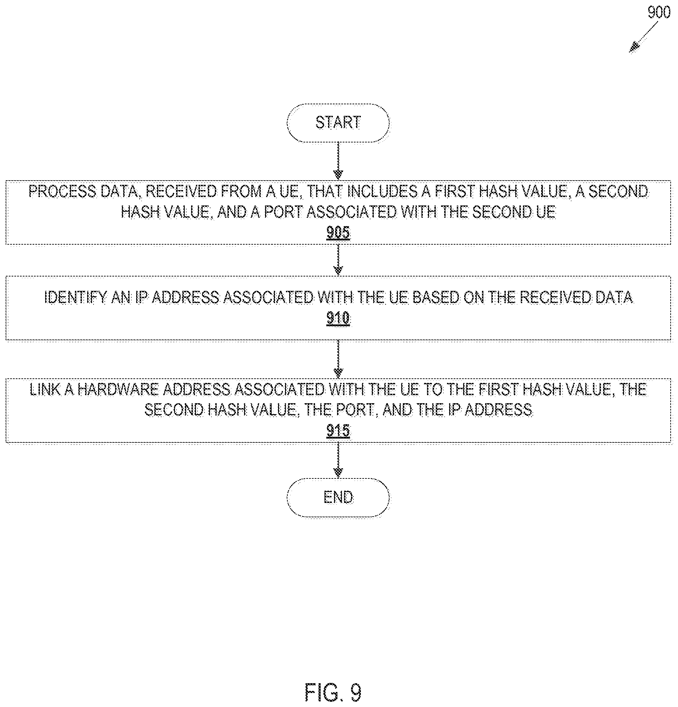

Turning to FIG. 9, a flow diagram illustrates a method 900 for storing hash values associated with provision of a resource by a UE, in accordance with various embodiments. The method 900 may be performed by a server computing system, such as the D2D server 150 of FIG. 1. While FIG. 9 illustrates a plurality of sequential operations, one of ordinary skill would understand that one or more operations of the method 900 may be transposed and/or performed contemporaneously.

To begin, the method 900 may include operation 905 for processing data, received from a UE, that includes a first hash value, a second hash value, and a port. In various embodiments, the first hash value may be generated based on a descriptor associated with provision of a resource by the UE and the second hash value may be generated based on the resource to be provided by the second UE. However, the computing system performing the method 900 may be agnostic to the descriptor and/or the resource from which the first and second hash values are respectively generated. In various embodiments, the computing system performing the method 900 may not, in fact, store and/or index any data and/or metadata associated with the descriptor and/or resource so that overhead (e.g., storage and/or processor consumption) is reduced. To further reduce overhead, the first and second hash values may be constrained to a maximum or specifically predetermined length. The port may serve as a communication endpoint at the UE and may be, for example, a numerical value.

Operation 910 may include identifying an IP address associated with the UE based on the received data. In various embodiments, operation 910 may include operations associated with determining one or more radio interfaces at which the UE is adapted to receive data over a network, such as a Wi-Fi interface and/or cellular data interface. Because the UE may include a plurality of radio interfaces, a plurality of IP addresses may be identified.

At operation 915, the method 900 may include linking a hardware address associated with the UE to the first hash value, the second hash value, the port, and the one or more IP addresses. In various embodiments, operation 915 may include operations associated with creating or updating a record in a database table. For example, the hardware address, the first hash value, the second hash value, the port, and the one or more IP addresses may be inserted into respective fields of a database table that is at least partially keyed by the hardware address. Thus, a request for resource provision from another UE that includes hash values may be matched to the stored hash values for the UE and a D2D connection between the UE and the requesting UE may be established based on the hardware address. Therefore, the computing system performing the method 900 may enable the UE and the requesting UE to engage in D2D communication. Additionally, the IP address and port associated with the UE may be transmitted to the requesting UE so that the UE may provide resources to the requesting UE (e.g., between respective P2P applications) over a D2D channel.

In various embodiments, example 1 may be an apparatus to be included in a user equipment ("UE"), the apparatus comprising: a hash value module to determine a first hash value that is generated based on a descriptor associated with provision of a resource by the UE, to determine a second hash value that is generated based on the resource to be provided by the UE, and to determine a port associated with the provision of the resource by the UE; and a communication interface, communicatively coupled with the hash value module, to transmit the first hash value, the second hash value, and an indication of the port to a server over a network to facilitate device-to-device communication with another UE. Example 2 may be the apparatus of example 1, wherein the hash value module is to generate the second hash value based on application of a nonreversible hash function to a label associated with the resource. Example 3 may be the apparatus of example 2, wherein the nonreversible hash function is further applied to metadata associated with the resource to generate the second hash value. Example 4 may be the apparatus of example 1, wherein the resource is a service or content to be provided by an application associated with the UE. Example 5 may be the apparatus of example 4, wherein the descriptor associated with the provision of the content or the service by the UE is an application identifier associated with the application to provide the content or a user identifier associated with the service. Example 6 may be the apparatus of any of examples 1-5, wherein the first hash value is predefined. Example 7 may be the apparatus of any of examples 1-5, wherein the hash value module is to generate the first hash value by application of a nonreversible hash function to the descriptor.

In various embodiments, example 8 may be an apparatus to be included in a user equipment ("UE"), the apparatus comprising: a hash value module to determine a first hash value that is generated based on a descriptor associated with provision of a resource by another UE, to determine a second hash value that is generated based on the resource to be provided by the other UE; and a communication interface, communicatively coupled with the hash value module, to transmit a request that includes the first hash value and the second hash value to a server over a network, and to process connectivity information, received from the server based on the request, associated with device-to-device ("D2D") communication with the other UE. Example 9 may be the apparatus of example 8, wherein the connectivity information includes at least one of a device discovery information for D2D communication with the other UE, D2D connection establishment information for D2D communication with the other UE, or an Internet protocol address and a port associated with peer-to-peer communication. Example 10 may be the apparatus of example 8, wherein the hash value module is to generate the second hash value based on application of a nonreversible hash function to a label associated with the resource. Example 11 may be the apparatus of example 10, wherein the nonreversible hash function is further to applied to metadata associated with the resource to generate the second hash value. Example 12 may be the apparatus of any of examples 8-11, wherein the hash value module is to generate the first hash value by application of a nonreversible hash function to the descriptor. Example 13 may be the apparatus of any of examples 8-11, wherein the request comprises a uniform resource identifier ("URI"). Example 14 may be the apparatus of example 13, wherein the URI includes a location parameter associated with the communication with the other UE, a timing parameter associated with the communication with the other UE, or a file hierarchy associated with the provision of the resource by the other UE.

In various embodiments, example 15 may be a server for resource provision based on hash space, the server comprising: a hash space module to process a request, received from a first user equipment ("UE"), that includes a first hash value and a second hash value, and to identify an internet protocol ("IP") address and a port associated with a second UE based on the first hash value and the second hash value; and a proximity services module, communicatively coupled with the hash space module, to transmit connectivity information to the first UE based on the IP address and the port for communication with the second UE. Example 16 may be the server of example 15, wherein the connectivity information comprises at least one of device discovery information associated with D2D communication, D2D connection establishment information, or the IP address and the port. Example 17 may be the server of example 15, wherein the request comprises a uniform resource identifier ("URI"). Example 18 may be the server of example 15, wherein the request includes a parameter associated with the communication between the first UE and the second UE, and the proximity services module is to transmit the connectivity information to the first UE based on the parameter. Example 19 may be the server of any of examples 15-18, the server further comprising a hash linking module to: process data, received from the second UE, that includes a third hash value, a fourth hash value, and the port associated with the second UE, identify the IP address associated with the second UE based on the data received from the second UE, and link a hardware address associated with the second UE to the third hash value, the fourth hash value, the port, and the IP address. Example 20 may include the server of example 19, wherein the hash space module is to identify the IP address and the port associated with the second UE based on determination that the first hash value matches the third hash value and determination that the second hash value matches the fourth hash value. Example 21 may include the server of any of examples 15-18, wherein the server does not store metadata associated with content and services to be provided by the second UE. Example 22 may include the server of any of examples 15-18, wherein respective lengths of the first and second hash values are constrained.

In various embodiments, example 23 may be one or more non-transitory computing device-readable media comprising computing device-executable instructions to be included in a server, wherein the instructions, in response to execution by a computing device, cause the computing device to: process a request, received from a first user equipment ("UE"), that includes a first hash value and a second hash value; identify an internet protocol ("IP") address and a port associated with a second UE based on the first hash value and the second hash value; and enable device-to-device communication between the first UE and the second UE based on the IP address and the port. Example 24 may include the one or more non-transitory computing device-readable media of example 23, wherein to enable device-to-device communication between the first UE and the second UE comprises to: transmit a UE identifier associated with the second UE to the first UE for device-to-device discovery; and transmit the IP address and the port associated with the second UE to the first UE. Example 25 may include the one or more non-transitory computing device-readable media of any of examples 23-24, wherein the instructions further cause the computing device to: process data, received from the second UE, that includes a third hash value, a fourth hash value, and the port associated with the second UE; identify the IP address associated with the second UE based on the data received from the second UE; and link a hardware address associated with the second UE to the third hash value, the fourth hash value, the port, and the IP address.

In various embodiments, example 26 may be a computer-implemented method, the method comprising: processing a request, received from a first user equipment ("UE"), that includes a first hash value and a second hash value; identifying an internet protocol ("IP") address and a port associated with a second UE based on the first hash value and the second hash value; and enabling device-to-device communication between the first UE and the second UE based on the IP address and the port. Example 27 may include the method of example 26, wherein enabling the device-to-device communication comprises: transmitting a UE identifier associated with the second UE to the first UE for device-to-device discovery; and transmitting the IP address and the port associated with the second UE to the first UE. Example 28 may include the method of any of examples 26-27, the method further comprising: processing data, received from the second UE, that includes a third hash value, a fourth hash value, and the port associated with the second UE; identifying the IP address associated with the second UE based on the data received from the second UE; and linking a hardware address associated with the second UE to the third hash value, the fourth hash value, the port, and the IP address.

In various embodiments, example 29 may be one or more non-transitory computing device-readable media comprising computing device-executable instructions to be included in a user equipment ("UE"), wherein the instructions, in response to execution by a computing device, cause the computing device to: determine a first hash value that is generated based on a descriptor associated with provision of a resource by the UE; determine a second hash value that is generated based on the resource to be provided by the UE; determine a port associated with the provision of the resource by the UE; and transmit the first hash value, the second hash value, and an indication of the port to a server over a network to facilitate device-to-device communication with another UE. Example 30 may include the one or more non-transitory computing device-readable media of example 29, wherein the instructions further cause the computing device to generate the second hash value based on application of a nonreversible hash function to a label associated with the resource. Example 31 may include the one or more non-transitory computing device-readable media of example 29, wherein the nonreversible hash function is further applied to metadata associated with the resource to generate the second hash value. Example 32 may include the one or more non-transitory computing device-readable media of any of examples 29-31, wherein the resource is a service or content to be provided by an application associated with the UE. Example 33 may include the one or more non-transitory computing device-readable media of example 32, wherein the descriptor associated with the provision of the content or the service by the UE is an application identifier associated with the application to provide the content or a user identifier associated with the service.

In various embodiments, example 34 may be an apparatus, the apparatus comprising: means for determining a first hash value that is generated based on a descriptor associated with provision of a resource by another UE; means for determining a second hash value that is generated based on the resource to be provided by the other UE; means for transmitting a request that includes the first hash value and the second hash value to a server over a network; and means for processing connectivity information, received from the server based on the request, associated with device-to-device ("D2D") communication with the other UE. Example 35 may be the apparatus of example 34, wherein the connectivity information includes at least one of device discovery information for D2D communication with the other UE, D2D connection establishment information for D2D communication with the other UE, or an Internet protocol address and a port associated with peer-to-peer communication. Example 36 may be the apparatus of example 34, wherein the means for determining the second hash value comprises: means for generating the second hash value based on application of a nonreversible hash function to a label associated with the resource. Example 37 may include the apparatus of example 36, wherein the nonreversible hash function is further to applied to metadata associated with the resource to generate the second hash value. Example 38 may include the apparatus of any of examples 34-37, wherein the means for determining the first hash value comprises: means for generating the first hash value by application of a nonreversible hash function to the descriptor. Example 39 may include the apparatus of any of examples 34-37, wherein the request comprises a uniform resource identifier ("URI"). Example 40 may include the apparatus of example 39, wherein the URI includes a location parameter associated with the communication with the other UE, a timing parameter associated with the communication with the other UE, or a file hierarchy associated with the provision of the resource by the other UE.

Some portions of the preceding detailed description have been presented in terms of algorithms and symbolic representations of operations on data bits within a computer memory. These algorithmic descriptions and representations are the ways used by those skilled in the data processing arts to most effectively convey the substance of their work to others skilled in the arts. An algorithm is here, and generally, conceived to be a self-consistent sequence of operations leading to a desired result. The operations are those requiring physical manipulations of physical quantities.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission, or display devices.

Embodiments of the invention also relate to an apparatus for performing the operations herein. Such a computer program is stored in a non-transitory computer-readable medium. A machine-readable medium includes any mechanism for storing information in a form readable by a machine (e.g., a computer). For example, a machine-readable (e.g., computer-readable) medium includes a machine- (e.g., a computer-) readable storage medium (e.g., read only memory ("ROM"), random access memory ("RAM"), magnetic disk storage media, optical storage media, flash memory devices).

The processes or methods depicted in the preceding figures can be performed by processing logic that comprises hardware (e.g., circuitry, dedicated logic, etc.), software (e.g., embodied on a non-transitory computer-readable medium), or a combination of both. Although the processes or methods are described above in terms of some sequential operations, it should be appreciated that some of the operations described can be performed in a different order. Moreover, some operations can be performed in parallel rather than sequentially.

Embodiments of the present invention are not described with reference to any particular programming language. It will be appreciated that a variety of programming languages can be used to implement the teachings of embodiments of the invention as described herein.

## Claims

1. An apparatus to be included in a user equipment ("UE") (400), the apparatus comprising:
a hash value module (412) to determine a first hash value that is generated based on an application identifier,
**characterized in that** the application identifier is associated with an application, and **in that** the hash value module (412) is to provide a resource by the UE, to determine a second hash value that is generated based on metadata associated with the resource to be provided by the UE (400), and to determine a port associated with the provision of the resource by the UE (400) wherein the resource is a service or content to be provided by an application associated with the UE; and **in that** the apparatus further comprises:
a communication interface (430), communicatively coupled with the hash value module (412), to transmit the first hash value, the second hash value, and an indication of the port to a web server as a Uniform Resource Identifier, URI, over a network to be published for another UE (400).

2. The apparatus of claim 1, wherein the hash value module is to generate the second hash value based on application of a nonreversible hash function to a label associated with the resource.

3. The apparatus of claim 1 or 2, wherein the first hash value is predefined.

4. The apparatus of claim lor 2, wherein the hash value module is to
generate the first hash value by application of a nonreversible hash function to the descriptor.

5. One or more non-transitory computing device-readable media comprising computing device-executable instructions to be included in a server, wherein the instructions, in response to execution by a computing device, cause the computing device to:
determine a first hash value that is generated based on an application identifier;
**characterized in that** the application identifier is associated with an application, and **in that** the hash value module (412) is to provide a resource by a UE (400); and **in that** the instructions further cause the computer device to
determine a second hash value that is generated based on metadata associated with the resource to be provided by the UE (400) wherein the resource is a service or content to be provided by the application and **in that** the instructions further cause the computer device to;
determine a port associated with the provision of the resource by the UE; and
transmit the first hash value, the second hash value, and an indication of the port to a web server as a Uniform Resource Identifier, URI, over a network to be published for another UE (400).

## Patentansprüche

1. Vorrichtung, die in einer Benutzerausrüstung ("UE") (400) enthalten sein soll, wobei die Vorrichtung umfasst:
ein Hashwertmodul (412) zum Bestimmen eines ersten Hashwertes, der basierend auf einem Anwendungsidentifikator erzeugt wird,
**dadurch gekennzeichnet, dass** der Anwendungsidentifikator einer Anwendung zugeordnet ist, und dass das Hashwertmodul (412) eine Ressource durch die UE bereitstellen soll, um einen zweiten Hashwert zu bestimmen, der basierend auf Metadaten erzeugt wird, die der von der UE (400) bereitzustellenden Ressource zugeordnet sind, und um einen Port zu bestimmen, der der Bereitstellung der Ressource durch die UE (400) zugeordnet ist, wobei die Ressource ein Dienst oder Inhalt ist, der von einer der UE zugeordneten Anwendung bereitzustellen ist; und dass die Vorrichtung ferner umfasst:
eine Kommunikationsschnittstelle (430), die kommunikativ mit dem Hashwertmodul (412) gekoppelt ist, um den ersten Hashwert, den zweiten Hashwert und eine Anzeige des Ports an einen Webserver als Uniform Resource Identifier, URI, über ein Netzwerk zu übertragen, das für eine andere UE (400) veröffentlicht werden soll.

2. Vorrichtung nach Anspruch 1, wobei das Hashwertmodul den zweiten Hashwert basierend auf der Anwendung einer nicht umkehrbaren Hashfunktion auf ein der Ressource zugeordnetes Label erzeugen soll.

3. Vorrichtung nach Anspruch 1 oder 2, wobei der erste Hashwert vordefiniert ist.

4. Vorrichtung nach Anspruch 1 oder 2, wobei das Hashwertmodul den ersten Hashwert durch Anwendung einer nicht umkehrbaren Hashfunktion auf den Deskriptor erzeugen soll.

5. Ein oder mehrere nichtflüchtige, von einer Rechenvorrichtung lesbare Medien, umfassend von einer Rechenvorrichtung ausführbare Anweisungen, die in einem Server enthalten sein sollen, wobei die Anweisungen als Reaktion auf die Ausführung durch eine Rechenvorrichtung bewirken, dass die Rechenvorrichtung:
einen ersten Hashwert bestimmt, der basierend auf einem Anwendungsidentifikator erzeugt wird;
**dadurch gekennzeichnet, dass** der Anwendungsidentifikator einer Anwendung zugeordnet ist, und dass das Hashwertmodul (412) eine Ressource durch eine UE (400) bereitstellen soll; und dass die Anweisungen ferner bewirken, dass die Rechenvorrichtung einen zweiten Hashwert bestimmt, der basierend auf Metadaten erzeugt wird, die der von der UE (400) bereitzustellenden Ressource zugeordnet sind, wobei die Ressource ein Dienst oder Inhalt ist, der von der Anwendung bereitzustellen ist, und dass die Anweisungen ferner bewirken, dass die Rechenvorrichtung;
einen Port bestimmt, der der Bereitstellung der Ressource durch die UE zugeordnet ist; und
den ersten Hashwert, den zweiten Hashwert und eine Angabe des Ports an einen Webserver als Uniform Resource Identifier, URI, über ein Netzwerk überträgt, das für eine andere UE (400) veröffentlicht werden soll.

## Revendications

1. Appareil destiné à être inclus dans un équipement d'utilisateur (UE) (400), l'appareil comprenant :
un module de valeur de hachage (412) pour déterminer une première valeur de hachage qui est générée sur la base d'un identifiant d'application,
l'appareil étant **caractérisé en ce que** l'identifiant d'application est associé à une application et **en ce que** le module de valeur de hachage (412) sert à fournir une ressource par l'UE, à déterminer une seconde valeur de hachage qui est générée sur la base de métadonnées associées à la ressource que doit fournir l'UE (400), et à déterminer un port associé à la fourniture de la ressource par l'UE (400), la ressource étant un service ou un contenu que doit fournir une application associée à l'UE ; et l'appareil étant **caractérisé en ce qu'**il comprend en outre :
une interface de communication (430), couplée en communication au module de valeur de hachage (412), pour transmettre la première valeur de hachage, la seconde valeur de hachage et une indication du port à un serveur Web en tant qu'identifiant de ressource uniforme (URI) sur un réseau, qui doit être publié pour un autre UE (400).

2. Appareil selon la revendication 1, dans lequel le module de valeur de hachage sert à générer la seconde valeur de hachage sur la base de l'application d'une fonction de hachage non réversible à un libellé associé à la ressource.

3. Appareil selon la revendication 1 ou 2, dans lequel la première valeur de hachage est prédéfinie.

4. Appareil selon la revendication 1 ou 2, dans lequel le module de valeur de hachage sert à :
générer la première valeur de hachage en appliquant une fonction de hachage non réversible au descripteur.

5. Support(s) non temporaire(s) et lisible(s) par dispositif informatique, comprenant des instructions exécutables par dispositif informatique qui doivent être incluses sur un serveur, les instructions, en réponse à leur exécution par un dispositif informatique, amenant le dispositif informatique à :
déterminer une première valeur de hachage qui est générée sur la base d'un identifiant d'application ;
le ou les supports étant **caractérisés en ce que** l'identifiant d'application est associé à une application et **en ce que** le module de valeur de hachage (412) sert à fournir une ressource par un UE (400) ; et **en ce que** les instructions amènent en outre le dispositif informatique à :
déterminer une seconde valeur de hachage qui est générée sur la base de métadonnées associées à la ressource que doit fournir l'UE (400), la ressource étant un service ou un contenu que doit fournir l'application, et **en ce que** les instructions amènent en outre le dispositif informatique à :
déterminer un port associé à la fourniture de la ressource par l'UE ; et
transmettre la première valeur de hachage, la seconde valeur de hachage et une indication du port à un serveur Web en tant qu'identifiant de ressource uniforme (URI) sur un réseau, qui doit être publié pour un autre UE (400).
